Europäisches Patentamt

European Patent Office

Office européen des brevets

(19)

(11) Veröffentlichungsnummer: **0 220 603**
**B1**

(12)

# EUROPÄISCHE PATENTSCHRIFT

(45) Veröffentlichungstag der Patentschrift:
13.09.89

(51) Int. Cl.⁴: **C08F 26/00**, C08F 2/06

(21) Anmeldenummer: **86114235.4**

(22) Anmeldetag: **15.10.86**

(54) **Verfahren zur Herstellung von pulverförmigen Polymerisaten.**

(30) Priorität: **22.10.85 DE 3537457**
**22.10.85 DE 3537455**

(43) Veröffentlichungstag der Anmeldung:
**06.05.87 Patentblatt 87/19**

(45) Bekanntmachung des Hinweises auf die Patenterteilung:
**13.09.89 Patentblatt 89/37**

(84) Benannte Vertragsstaaten:
**AT BE CH DE FR GB IT LI NL**

(56) Entgegenhaltungen:
**GB-A- 1 172 713**

(73) Patentinhaber: **BASF Aktiengesellschaft,
Carl-Bosch-Strasse 38, D-6700 Ludwigshafen(DE)**

(72) Erfinder: **Hartmann, Heinrich, Dr., Weinheimer
Strasse 46, D-6703 Limburgerhof(DE)**
Erfinder: **Denzinger, Walter, Wormser Landstrasse 65,
D-6720 Speyer(DE)**

ACTORUM AG

## Beschreibung

Pulverförmige Polymerisate können nach verschiedenen Verfahren durch Polymerisieren von Monomeren hergestellt werden, z.B. nach dem Verfahren der Fällungspolymerisation, der umgekehrten Suspensionspolymerisation oder in einem Pulverbett. In allen Fällen benötigt man ein Verdünnungsmittel. Bei der Herstellung von wasserlöslichen, pulverförmigen Homopolymerisaten setzt man beispielsweise als Verdünnungsmittel aliphatische bzw. aromatische Kohlenwasserstoffe ein. Beim Polymerisieren im Festbett benötigt man inerte Flüssigkeiten als Siedehilfsmittel oder man setzt einen großen Überschuß eines leicht flüchtigen Monomeren ein, um die bei der Polymerisation entstehende Wärme abzuführen. Die bei der Polymerisation verwendeten inerten Flüssigkeiten müssen aus den Polymerisaten entfernt bzw. zurückgewonnen werden. Als besonders problematisch ist die Entfernung geringer Mengen an aromatischen Kohlenwasserstoffen bzw. Halogenkohlenwasserstoffen aus wasserlöslichen Polymerisaten anzusehen.

Aus der US-PS 4 250 331 ist bekannt, daß man Carbonsäuren aus verdünnten wäßrigen Lösungen von Alkalimetallsalzen der Carbonsäuren dadurch gewinnen kann, daß man die wäßrigen Lösungen der Alkalimetallsalze der Carbonsäuren bei Temperaturen von 35 bis 200°C und Drücken von 80 bis 500 atm mit einer überkritischen Flüssigkeit behandelt, die mindestens 10 Mol% Kohlendioxid enthält. Unter den Reaktionsbedingungen bildet sich aus dem Salz der Carbonsäure die freie Carbonsäure, die sich in der überkritischen Flüssigkeit löst und daraus durch Druckerniedrigung isoliert wird.

Aus der US-PS 3 522 228 ist ein Verfahren zur Herstellung von Polymerisaten bekannt, bei dem man ethylenisch ungesättigte Monomere in Gegenwart von Katalysatoren oder durch Einwirkung energiereicher Strahlung in flüssigem Kohlendioxid bei Temperaturen von -78 bis 100°C unter erhöhtem Druck der Homo- oder Copolymerisation unterwirft. Die Polymerisate fallen in Form von gröberen Pulvern oder viskosen Ölen an, aus denen sie durch Behandlung mit Flüssigkeiten, in denen sich die Polymerisate nicht lösen, ausgefällt werden.

Der vorliegenden Erfindung liegt die Aufgabe zugrunde, ein Verfahren zur Verfügung zu stellen, gemäß dem besonders feinteilige pulverförmige Polymerisate durch Polymerisation der Monomeren in einem Verdünnungsmittel erhalten werden, das physiologisch unbedenklich ist und aus den Polymerisaten leicht entfernt werden kann.

Die Aufgabe wird erfindungsgemäß gelöst mit einem Verfahren zur Herstellung von pulverförmigen Polymerisaten durch Polymerisieren von ethylenisch ungesättigten Verbindungen in Kohlendioxid unter Druck in Gegenwart von Radikale bildenden Initiatoren und Verdampfen des Kohlendioxids, wenn man als ethylenisch ungesättigte Verbindungen N-Vinylcarbonsäureamide, wasserlösliche Ester ethylenisch ungesättigter Carbonsäuren, N-Vinyllactame, N-Vinylimidazole, N-Vinylimidazoline homopolymerisiert und N-Vinylformamid mit N-Vinylpyrrolidon oder Vinylacetat copolymerisiert, wobei man die Polymerisation jeweils in überkritischem Kohlendioxid unter Durchmischung bei Temperaturen von etwa 31 bis 150°C und Drücken oberhalb von 73 bar durchführt und auf 100 Gew.-Teile Monomer 100 bis 1500 Gew.-Teile Kohlendioxid einsetzt.

Zur Herstellung von Homopolymerisaten geeignete N-Vinylcarbonsäureamide sind beispielsweise diejenigen Monomeren, die sich von N-Vinylcarbonsäureamiden von gesättigten $C_1$- bis $C_6$-Carbonsäuren ableiten, z.B. N-Vinylformamid, N-Vinyl-N-methyl-formamid, N-Vinylacetamid, N-Vinyl-N-methyl-acetamid, N-Vinylpropionamid, N-Vinyl-N-methyl-propionamid, N-Vinylbutyramid und N-Vinylcapronamid sowie geeignete N-Vinyllactame sind beispielsweise N-Vinylpyrrolidon und N-Vinylcaprolactam.

Eine andere Gruppe von Monomeren, aus denen technisch wertvolle Homopolymerisate hergestellt werden, bilden wasserlösliche Ester von monoethylenisch ungesättigten Carbonsäuren. Vorzugsweise verwendet man die wasserlöslichen Ester von ethylenisch ungesättigten $C_3$- bis $C_5$-Carbonsäuren. Die wasserlöslichen Ester der ethylenisch ungesättigten Carbonsäuren leiten sich entweder von Aminoalkoholen oder von Glykolen bzw. Polyglykolen ab, wobei jeweils nur eine OH-Gruppe der Glykole und Polyglykole mit einer ethylenisch ungesättigten Carbonsäure verestert ist.

Geeignete Ester dieser Art sind beispielsweise Di-$C_1$- bis $C_3$-alkylamino-$C_2$- bis $C_6$-alkyl-(meth)-acrylate, wie Dimethylaminoethylacrylat, Dimethylaminoethylmethacrylat, Diethylaminoethylmethacrylat, Dipropylaminoethylacrylat, Dimethylaminopropylacrylat, Dimethylaminopropylmethacrylat, Dimethylaminobutylacrylat, Dimethylaminobutylmethacrylat, Dimethylaminopentylacrylat, Dimethylaminoneopentylmethacrylat und Dimethylaminohexylacrylat. Die basischen Acrylate werden in Form der freien Basen, der Salze mit Mineralsäuren, z.B. Salzsäure oder Schwefelsäure, oder in quaternisierter Form eingesetzt (geeignete Quaternisierungsmittel sind beispielsweise Dimethylsulfat, Methylchlorid, Ethylchlorid oder Benzylchlorid).

Geeignete Ester von Glykolen, Polyglykolen oder mehrwertigen Alkoholen, von denen jeweils nur eine Hydroxylgruppe verestert ist, sind beispielsweise Hydroxyethylacrylat, Hydroxyethylmethacrylat und Acrylsäuremono ester von Polyalkylenglykolen eines Molekulargewichts von 1500 bis 10 000 im Molverhältnis 1:1, die entsprechenden Methacrylsäureester, sowie Ester von Acrylsäure und Methacrylsäure mit Blockcopolymerisaten aus Ethylenoxid und Propylenoxid, in denen das Mol-Verhältnis von ethylenisch ungesättigter Carbonsäure zu Alkohol 1:1 beträgt. Die Salze oder Quaternisierungsprodukte der basischen Ester sowie die Hydroxyalkylester der ethylenisch ungesättigten Carbonsäuren bilden Homopolymerisate, die sich in Wasser lösen. Auch die Homopolymerisate von N-Vinylpyrrolidon sowie von N-Vinylcaprolactam sind wasserlöslich.

Als Monomere eignen sich außerdem für das erfindungsgemäße Verfahren zur Herstellung von Homopolymerisaten N-Vinylimidazol sowie substituierte N-Vinylimidazole, z .B. N-Vinyl-2-methylimidazol, N-Vinyl-4-methylimidazol, N-Vinyl-5-methylimidazol, N-Vinyl-2-ethylimidazol, N-Vinyl-2-propylimidazol, N-Vinyl-2-isopropylimidazol und N-Vinylimidazoline, wie N-Vinylimidazolin, N-Vinyl-2-methylimidazolin, N-Vinyl-2-ethylimidazolin, N-Vinyl-2-isopropylimidazolin, N-Vinyl-2-n-propylimidazolin, N-Vinyl-2-phenylimidazolin.

N-Vinylimidazole und N-Vinylimidazoline werden außer in Form der freien Basen in mit Mineralsäuren neutralisierter oder in quaternisierter Form eingesetzt, wobei die Quaternisierung vorzugsweise mit Dimethylsulfat, Benzylchlorid, Methylchlorid oder Ethylchlorid vorgenommen wird.

Zur Herstellung der Homopolymerisate geht man vorzugsweise von N-Vinylformamid, N-Vinyl-N-methyl-formamid, N-Vinylpyrrolidon, Hydroxyethylacrylat, Hydroxyethylmethacrylat, Dimethylaminoethylacrylat, Dimethylaminoethylmethacrylat und Diethylaminoethylacrylat aus. Die basischen Monomeren können auch in Form des Salzes mit starken Mineralsäuren oder in quaternisierter Form eingesetzt werden.

Von technischem Interesse sind Copolymerisate aus N-Vinylformamid und N-Vinylpyrrolidon sowie Copolymerisate aus N-Vinylformamid und Vinylacetat. N-Vinylformamid und N-Vinylpyrrolidon können in jedem beliebigen Verhältnis copolymerisiert werden. Die Copolymerisate aus N-Vinylformamid und Vinylacetat werden durch Copolymerisieren von Monomerenmischungen hergestellt, die bis zu 90 Gew.%, vorzugsweise 5 bis 60 Gew.% Vinylacetat enthalten. Sämtliche Monomeren werden vorzugsweise in wasserfreier Form bei der Polymerisation eingesetzt.

Die Polymerisation wird unter Druck in überkritischem Kohlendioxid als inertem Verdünnungsmittel durchgeführt. Über die Eigenschaften von Kohlendioxid in flüssigem und im überkritischen Zustand berichtet J.A. Hyatt, J. Org. Chem. 49, 5097-5101 (1984). Danach liegt der kritische Punkt von Kohlendioxid bei etwa 31°C und 73 bar. Die Homo- und Copolymerisation der oben angegebenen Monomeren erfolgt in überkritischem Kohlendioxid bei Temperaturen von oberhalb etwa 31°C, der kritischen Temperatur des Kohlendioxids. Als obere Grenze für die Herstellung der Polymerisate wird diejenige Temperatur angesehen, die 10°C unterhalb des beginnenden Erweichungsbereiches der jeweils entstehenden Polymerisate liegt. Der obere Wert für diese Temperaturgrenze beträgt 150°C. Die Homo- und Copolymerisation wird vorzugsweise in dem Temperaturbereich von 40 bis 130°C, insbesondere 70 bis 130°C durchgeführt. Die Drücke liegen dabei oberhalb von 73 bar, vorzugsweise in dem Bereich von 80 bis 300 bar.

Die Polymerisationsreaktion wird mit Hilfe von in Radikale zerfallende Polymerisationsinitiatoren gestartet. Es können sämtliche Initiatoren eingesetzt werden, die für die Polymerisation der in Betracht kommenden Monomeren bekannt sind. Geeignet sind beispielsweise in Radikale zerfallende Initiatoren, die bei den jeweils gewählten Temperaturen eine Halbwertzeit von weniger als 3 Stunden besitzen. Falls die Polymerisation bei zwei unterschiedlichen Temperaturen durchgeführt wird, indem man die Monomeren zunächst bei einer niedrigeren Temperatur anpolymerisiert und anschließend bei einer deutlich höheren Temperatur auspolymerisiert, verwendet man zweckmäßigerweise mindestens zwei unterschiedliche Initiatoren, die in dem jeweils gewählten Temperaturbereich eine ausreichende Zerfallgeschwindigkeit haben. Beispielsweise kann man in den nachstehend angegebenen Temperaturbereichen folgende Initiatoren verwenden:

Temp.: 40 bis 60°C
Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxi-2,4-dimethylvaleronitril)
Temp.: 60 bis 80°C
tert.-Butylperpivalat, Dioctanoylperoxid, Dilauroylperoxid, 2,2'-Azobis-(2,4-dimethylvaleronitril), tert.-Butylazo-2-cyanobutan
Temp.: 80 bis 100°C
Dibenzoylperoxid, tert.-Butylper-2-ethylhexanoat, tert.-Butylpermaleinat, 2,2-Azobis-(isobutyronitril)
Temp.: 100 bis 120°C
Bis-(tert.-butylperoxi)-cyclohexan, tert.-Butylperoxiisopropylcarbonat, tert.-Butylperacetat
Temp.: 120 bis 140°C
2,2-Bis-(tert.-butylperoxi)-butan, Dicumylperoxid, Di-tert.-amylperoxid, Di-tert.-butylperoxid
Temp.: 140 bis 160°C
p-Menthanhydroperoxid, Pinanhydroperoxid, Cumolhydroperoxid, tert.-Butylhydroperoxid.

Durch die Mitverwendung von Redox-Coinitiatoren, beispielsweise Benzoin, Dimethylanilin sowie organisch löslicher Komplexe und Salze von Schwermetallen, wie Kupfer, Kobalt, Mangan, Eisen, Nickel und Chrom, können die Halbwertzeiten der genannten Peroxide, besonders der Hydroperoxide, verringert werden, so daß beispielsweise tert.-Butylhydroperoxid in Gegenwart von 5 ppm Kupfer-II-Acetylacetonat bereits bei 100°C wirksam ist.

Die Polymerisationsinitiatoren werden in den bei Polymerisationen üblichen Mengen eingesetzt, z.B. benötigt man pro 100 Gew.Teile der Monomeren 0,05 bis 10, vorzugsweise 0,1 bis 5 Gew.Teile eines Initiators.

Die Polymerisation kann gegebenenfalls auch in Gegenwart von Polymerisationsreglern durchgeführt werden, um das Molekulargewicht der Polymerisate zu regeln. Sofern man besonders niedrigmolekulare Copolymerisate herstellen will, setzt man höhere Mengen an Polymerisationsreglern ein, während man für die Herstellung von hochmolekularen Copolymerisaten nur geringe Mengen an Polymerisationsreglern verwendet bzw. in Abwesenheit dieser Stoffe arbeitet. Geeignete Polymerisationsregler sind beispielsweise 2-Mercapto-ethanol, Mercaptopropanole, Mercaptobutanole, Thioglykolsäure, n-Dodecylmercaptan, tert.-Dodecylmercaptan, Thiophenol, Mercaptopropionsäure, Allylalkohol und Acetaldehyd.

Die Polymerisationsregler werden, bezogen auf die Menge des eingesetzten Monomeren, in einer Menge von 0,05 bis 10, vorzugsweise 0,1 bis 5 Gew.%, verwendet.

Bezogen auf 100 Gew.Teile eines bei der Homopolymerisation bzw. der bei der Copolymerisation eingesetzten Monomeren verwendet man 100 bis 1500, vorzugsweise 200 bis 900 Gew.Teile Kohlendioxid. Die Polymerisationsreaktion kann diskontinuierlich oder auch kontinuierlich in entsprechend ausgelegten Druckapparaten durchgeführt werden. Um die bei der Polymerisation entstehende Wärme abzuführen, ist es wünschenswert, daß die Druckapparaturen über ein Kühlsystem verfügen. Sie müssen selbstverständlich ebenso auch beheizbar sein, um die Reaktionsmischung auf die jeweils für die Polymerisation gewünschte Temperatur zu erhitzen. Die Druckapparaturen müssen über Mischeinrichtungen verfügen, z.B. Rührer (Blatt-, Impeller- oder Mehrstufenimpulsgegenstrom-Rührer) oder Schaufeln.

Die Druckpolymerisation kann beispielsweise so ausgeführt werden, daß man in einer Druckapparatur zunächst eine bestimmte Menge eines Monomeren und den Initiator vorlegt, dann Kohlendioxid in flüssiger Form einbringt und nach dem Verschließen des Autoklaven das Reaktionsgemisch auf die Polymerisationstemperatur erhitzt. Es ist jedoch auch möglich, nur einen Teil des Reaktionsgemisches im Autoklaven vorzulegen und es auf die Polymerisationstemperatur zu erhitzen und dann nach Maßgabe der Polymerisation weiteres Reaktionsgemisch zuzupumpen. Eine andere Möglichkeit besteht darin, nur einen Teil der Monomermenge in der gesamten erforderlichen Menge an Kohlendioxid im Autoklaven vorzulegen und die restliche Monomermenge zusammen mit dem Initiator nach Fortschritt der Polymerisation in den Autoklaven einzupumpen. Während der Polymerisation muß für eine gute Durchmischung der Reaktionsmasse gesorgt werden. Nach Abschluß der Polymerisationsreaktion wird das Reaktionsgemisch gegebenenfalls gekühlt und das Kohlendioxid abgetrennt. Dabei fallen die Homo- und Copolymerisate als pulverförmiger Rückstand an. Die Teilchengröße des Pulvers beträgt 0,5 $\mu$m bis 0,5 mm, vorzugsweise 1 $\mu$m bis 0,5 mm, wobei diese Teilchen aus Primärteilchen von 0,5 bis 3 $\mu$m Durchmesser bestehen und mehr oder weniger locker aggregiert sind.

In Abhängigkeit von den jeweils bei der Polymerisation gewählten Bedingungen erhält man Homopolymerisate mit einem K-Wert nach Fikentscher von 10 bis 300, vorzugsweise 20 bis 200. Die Homopolymerisate sind -abgesehen von wenigen Ausnahmen - wasserlöslich, es lösen sich mindestens 10 g Homopolymerisat pro Liter Wasser. Von besonderem Interesse sind die Homopolymerisate aus N-Vinylformamid und N-Vinylpyrrolidon. Die Homopolymerisate des N-Vinylformamids können durch Behandlung mit Basen oder Säuren in Polymerisate überführt werden, die neben unveränderten einpolymerisierten N-Vinylformamid-Einheiten N-Vinylamin-Einheiten enthalten. Derartige Polymerisate sind hochwirksame Flockungsmittel bei der Klärschlammentwässerung sowie Entwässerungs- und Retentionsmittel bei der Herstellung von Papier. Nach dem erfindungsgemäßen Verfahren herstellbaren Homopolymerisate können außerdem z.B. als Gerüststoffe in Waschmitteln sowie als Schlichtemittel, Klebrohstoffe, Leimungsmittel und/oder Verfestigungsmittel für Papier und bei der Tertiärförderung von Erdöl verwendet werden.

Die K-Werte wurden nach H. Fikentscher, Cellulose-Chemie 13, 58 bis 64 und 71 bis 74 (1932) in 5%iger Kochsalzlösung bei einer Polymerkonzentration von 0,1 Gew.%, einer Temperatur von 25°C bestimmt.

Beispiel 1

In einem 300 ml fassenden Autoklaven werden 15 g N-Vinylformamid und 0,3 g Azobisisobuttersäuredinitril vorgelegt. Nach Zugabe von 135 g flüssigem Kohlendioxid wird der Autoklav verschlossen und auf 80°C erwärmt. Der Autoklav ist mit einem Rührer und einer elektrsichen Heizung ausgestattet. Die Reaktionsmischung wird während des Aufheizens und der Polymerisation, die ca. 5 Stunden dauert, gerührt. Bei einer Polymerisationstemperatur von 80°C stellt sich ein maximaler Druck von 160 bar ein. Nach Beendigung der Polymerisation wird der Autoklaveninhalt gekühlt und entspannt. Man erhält ein weißes flockiges Pulver, das eine Teilchengröße von 10 bis 300 $\mu$m hat. Die Größe der Primärteilchen beträgt ca. 1 $\mu$m. Der K-Wert des Homopolymerisates beträgt 80,4.

Beispiel 2

In einem 300 ml fassenden Autoklaven, der mit einem Rührer und einer elektrischen Heizung ausgestattet ist, werden 15 g frisch destilliertes und wasserfreies N-Vinylpyrrolidon, 0,3 g Azobisisobuttersäuredinitril und 135 g flüssiges Kohlendioxid vorgelegt. Das Reaktionsgemisch wird gerührt und auf eine Temperatur von 80°C erwärmt. Dabei stellt sich ein maximaler Druck von 160 bar ein. Nach einer Polymerisationszeit von 5 Stunden wird der Autoklaveninhalt gekühlt und entspannt. Man erhält ein weißes pulverförmiges Polymerisat, das sich leicht in Wasser auflöst. Die Größe der Primärteilchen beträgt ca. 3 $\mu$m. Der K-Wert des Homopolymerisats beträgt 57.

Beispiel 3

In einem 300 ml fassenden Autoklaven, der mit einem Rührer und einer elektrischen Heizung ausgestattet ist, werden unter Ausschluß von Wasser 15 g wasserfreies N-Vinyl-2-methylimidazolinhydrochlorid, 0,3 g 2,2-Azobis-(2,4-dimethylvaleronitril) und 135 g flüssiges Kohlendioxid vorgelegt. Der Autoklav wird dann verschlossen und auf eine Temperatur von 75°C erhitzt. Dabei stellt sich ein maximaler Druck von 155 bar ein. Nach einer Polymerisationsdauer von 5 Stunden wird das Reaktionsgemisch abgekühlt und entspannt. Man erhält ein weißes Pulver, das sich sehr leicht in Wasser auflöst. Die Größe der Primärteilchen beträgt ca. 0,3 $\mu$m. Der K-Wert des Polymerisats beträgt 65.

## Beispiel 4

In einem 300 ml fassenden Autoklaven, der mit Rührer und elektrischer Heizung ausgestattet ist, werden 15 g 2-Hydroxyethylacrylat, 0,3 g Azobisobuttersäuredinitril und 135 g flüssiges Kohlendioxid vorgelegt. Nach dem Verschließen des Autoklaven wird das Reaktionsgemisch auf eine Temperatur von 80°C erwärmt. Dabei stellt sich ein maximaler Druck von 170 bar ein. Nach einer Polymerisationszeit von 4 Stunden erhält man ein weißes flockiges Homopolymerisat von Hydroxyethylacrylat, das einen K-Wert von 120 hat und dessen Primärteilchen einen Durchmesser von ca. 2 μm besitzen.

## Beispiel 5

In einem 300 ml fassenden Autoklaven, der mit einem Rührer und einer elektrischen Heizung ausgestattet ist, werden 7,5 g N-Vinylformamid, 7,5 g N-Vinylpyrrolidon (frisch destilliert) und 0,3 g Tert.-Butylperethylhexanoat vorgelegt. Nun wird der Autoklav dicht verschlossen, 150 bar Stickstoff aufgepreßt, wieder entspannt und auf 100 mbar Druck evakuiert. Nun werden 135 g flüssiges Kohlendioxid eingefüllt. Der Autoklav wird dann dicht verschlossen und unter Rühren auf 80°C erhitzt, wobei sich ein Druck von 160 bar einstellt. Nach einer Polymerisationsdauer von 5 Stunden wird der Reaktorinhalt abgekühlt und langsam entspannt. Man erhält ein weißes Pulver, das sich leicht in Wasser auflöst. Die Größe der Primärteilchen beträgt ca. 3 μm. Der K-Wert des Polymeren beträgt 53.

## Beispiel 6

In einem 300 ml fassenden Autoklaven, der mit einem Rührer und einer elektrischen Heizung ausgestattet ist, werden 7,5 g N-Vinylformamid, 7,5 g Vinylacetat, 0,3 g Azobisisobuttersäuredinitril und 135 g flüssiges Kohlendioxid vorgelegt. Das Reaktionsgemisch wird gerührt und auf eine Temperatur von 80°C erwärmt. Dabei stellt sich ein maximaler Druck von 165 bar ein. Nach einer Polymerisationszeit von 5 Std. wird der Autoklaveninhalt gekühlt und entspannt. Man erhält ein weißes Pulver. Die Größe des Primärkorns ist ca. 1 μm. Der K-Wert des Polymerisates beträgt 39.

## Beispiel 7

In einem 300 ml fassenden Autoklaven, der mit Rührer und einer elektrischen Heizung ausgestattet ist, werden 12 g N-Vinylformamid, 3 g Vinylacetat, 0,3 g Azobisisobuttersäuredinitril und 135 g flüssiges Kohlendioxid vorgelegt. Das Reaktionsgemisch wird gerührt und auf eine Temperatur von 80°C erhitzt. Dabei stellt sich ein maximaler Druck von 165 bar ein. Nach einer Polymerisationszeit von 5 Std. wird der Autoklaveninhalt gekühlt und entspannt. Man erhält ein weißes Pulver. Die Größe des Primärkorns ist ca. 1 μm. Der K-Wert des Polymerisates beträgt 37.

## Patentansprüche

1. Verfahren zur Herstellung von pulverförmigen Polymerisaten durch Polymerisieren von ethylenisch ungesättigten Verbindungen in Kohlendioxid unter Druck in Gegenwart von Radikale bildenden Initiatoren und Verdampfen des Kohlendioxids, dadurch gekennzeichnet, daß man als ethylenisch ungesättigte Verbindungen N-Vinylcarbonsäureamide, wasserlösliche Ester ethylenisch ungesättigter Carbonsäuren, N-Vinyllactame, N-Vinylimidazole, N-Vinylimidazoline homopolymerisiert und N-Vinylformamid mit N-Vinylpyrrolidon oder bis zu 90 Gew.% Vinylacetat copolymerisiert, wobei man die Polymerisation jeweils in überkritischem Kohlendioxid unter Durchmischung bei Temperaturen von etwa 31 bis 150°C und Drücken oberhalb von 73 bar durchführt und auf 100 Gew.-Teile Monomer 100 bis 1500 Gew.-Teile Kohlendioxid einsetzt.

2. Verfahren nach Anspruch 1, dadurch gekennzeichnet, daß man auf 100 Gew.-Teile Monomer 200 bis 900 Gew.-Teile Kohlendioxid einsetzt.

3. Verfahren nach den Ansprüchen 1 und 2, dadurch gekennzeichnet, daß man N-Vinylformamid, N-Vinyl-N-methylformamid, N-Vinylpyrrolidon, Hydroxyethylacrylat, Hydroxyethylmethacrylat, Dimethylaminoethylmethacrylat, Dimethylaminoethylacrylat und Diethylaminoethylacrylat homopolymerisiert.

4. Verfahren nach den Ansprüchen 1 und 2, dadurch gekennzeichnet, daß man N-Vinylformamid und N-Vinylpyrrolidon oder N-Vinylformamid und bis zu 90 Gew.% Vinylacetat copolymerisiert.

## Claims

1. A process for the preparation of a polymer powder by polymerizing ethylenically unsaturated compounds in carbon dioxide under superatmospheric pressure in the presence of a a free radical initiator and vaporizing the carbon dioxide, wherein an N-vinylcarboxamide, a water-soluble ester of an ethylenically unsaturated carboxylic acid, an N-vinyllactam, an N-vinylimidazole or an N-vinyl imidazoline is homopolymerized or N-vinylformamide is copolymerized with N-vinylpyrrolidone or not more than 90% by weight of vinyl acetate, as the ethylenically unsaturated compound, the polymerization being carried out in each case in supercritical carbon dioxide with thorough mixing at about 31-150° under a pressure above 73 bar, and from 100 to 1500 parts by weight of carbon dioxide being employed per 100 parts by weight of monomer.

2. A process as claimed in claim 1, wherein from 200 to 900 parts by weight of carbon dioxide are used per 100 parts by weight of monomer.

3. A process as claimed in claims 1 and 2, wherein N-vinylformamide, N-vinyl-N-methylformamide, N-vinylpyrrolidone, hydroxyethyl acrylate, hydroxyethyl methacrylate, dimethylaminoethyl methacrylate, dimethylaminoethyl acrylate or diethylaminoethyl acrylate is homopolymerized.

4. A process as claimed in claims 1 and 2, wherein N-vinylformamide and N-vinylpyrrolidone or N-vinylformamide and not more than 90% by weight of vinyl acetate are copolymerized.

## Revendications

1. Procédé de préparation de polymères en poudre par polymérisation de composés éthyléniquement insaturés dans du dioxyde de carbone, sous pression et en présence d'initiateurs formateurs de radicaux, et par vaporisation du dioxyde de carbone, caractérisé en ce que, comme composés éthyléniquement insaturés, on homopolymérise des N-vinylamides d'acides carboxyliques, des esters solubles dans l'eau d'acides carboxyliques éthyléniquement insaturés, des N-vinylactames, des N-vinylimidazoles, des N-vinylimidazolines et on copolymérise le N-vinylformamide avec la N-vinylpyrrolidone ou avec jusqu'à 90% en poids d'acétate de vinyle, en effectuant chaque fois la polymérisation dans du dioxyde de carbone au-dessus de ses conditions critiques, par mélange à des températures d'environ 31 à 150°C et sous des pressions supérieures à 73 bars, et en mettant en œuvre, pour 100 parties en poids de monomère, 100 à 1500 parties en poids de dioxyde de carbone.

2. Procédé suivant la revendication 1, caractérisé en ce que l'on met en oeuvre, pour 100 parties en poids de monomère, 200 à 900 parties en poids de dioxyde de carbone.

3. Procédé suivant les revendications 1 et 2, caractérisé en ce que l'on homopolymérise du N-vinylformamide, du N-vinyl-N-méthylformamide, de la N-vinylpyrrolidone, de l'acrylate d'hydroxyéthyle, du méthacrylate d'hydroxyéthyle, du méthacrylate de diméthylaminoéthyle, de l'acrylate de diméthylaminoéthyle, et de l'acrylate de diéthylaminoéthyle.

4. Procédé suivant les revendications 1 et 2, caractérisé en ce que l'on copolymérise du N-vinylformamide et de la N-vinylpyrrolidone, ou du N-vinylformamide et jusqu'à 90% en poids d'acétate de vinyle.